(19) Europäisches Patentamt
European Patent Office
Office européen des brevets

(11) **EP 2 245 479 B1**

(12) **FASCICULE DE BREVET EUROPEEN**

(45) Date de publication et mention
de la délivrance du brevet:
**30.11.2016 Bulletin 2016/48**

(21) Numéro de dépôt: **09711654.5**

(22) Date de dépôt: **18.02.2009**

(51) Int Cl.:
***G01S 19/20*** *(2010.01)*    ***G01S 19/47*** *(2010.01)*

(86) Numéro de dépôt international:
**PCT/EP2009/051938**

(87) Numéro de publication internationale:
**WO 2009/103745 (27.08.2009 Gazette 2009/35)**

(54) **SYSTEME DE NAVIGATION A HYBRIDATION PAR LES MESURES DE PHASE**

NAVIGATIONSSYSTEM MIT PHASENMESSUNGSHYBRIDISIERUNG

NAVIGATION SYSTEM USING PHASE MEASURE HYBRIDISATION

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **19.02.2008 FR 0800883**

(43) Date de publication de la demande:
**03.11.2010 Bulletin 2010/44**

(73) Titulaire: **Thales
92400 Courbevoie (FR)**

(72) Inventeurs:
• **COATANTIEC, Jacques
F-26210 Fauconnieres (FR)**
• **JUILLAGUET, Sébastien
26300 Bourg De Peage (FR)**

(74) Mandataire: **Nguyen Van Yen, Christian
Marks & Clerk France
Conseils en Propriété Industrielle
Immeuble Visium
22, Avenue Aristide Briand
94117 Arcueil Cedex (FR)**

(56) Documents cités:
**EP-A- 1 571 460      FR-A- 2 830 320
US-A1- 2001 020 216    US-A1- 2007 211 793**

• **KAPLAN D; ET AL: "UNDERSTANDING GPS -
Principles and Applications" 1996, ARTECH
HOUSE, INC , US , XP002509171 ISBN:
0-89006-793-7 page 190 - page 192**

**Description**

La présente invention s'applique au domaine des systèmes de navigation pour aéronefs. Plus particulièrement, lorsque l'exigence de précision et d'intégrité est la plus forte, dans les phases d'approche et de décollage, les systèmes de navigation par satellites du type GNSS (Global Navigation Satellite System, comprenant les constellations Global Positioning System - GPS, GLONASS - version russe du GNSS - et dans le futur Galileo et Beidou, les futures constellations européenne et chinoise ; l'invention s'appliquerait en fait à tout système de navigation par satellites) ne fournissent pas aujourd'hui les garanties de précision et d'intégrité exigées par les normes de sécurité. On peut utiliser les systèmes d'augmentation de précision GBAS (Ground Based Augmentation System ou Système à précision améliorée par le segment SBAS (Satellite Based Augmentation System ou Système à précision améliorée par le segment satellite) sol mais ces systèmes ne sont disponibles que dans des zones équipées spécifiquement. La présente invention se rattache à la famille des systèmes à précision améliorée par le segment avion ou ABAS (Airborne Based Augmentation System ou ). Les techniques d'hybridation classiques, faisant appel à une combinaison de mesures de capteurs inertiels tels que des gyromètres et des accéléromètres avec des mesures de position, vitesse et attitude tirées du traitement des codes civils transmis par les satellites, ne sont pas non plus adaptées à ces phases de vol à haute exigence de précision et d'intégrité, notamment parce que les erreurs du système de positionnement sont affectées dans ces phases de vol de manière importante par les erreurs dues à la propagation ionosphérique et aux multi-trajets qui constituent en effet les parts prépondérantes des erreurs de mesure du récepteur GNSS respectivement en vol et au sol. Une solution imparfaite à ce problème est apportée par la demande de brevet français publiée sous le n°FR2830320.

L'invention résout plus complètement ce problème en fournissant des mesures de positionnement hybridées qui répondent aux exigences de précision et d'intégrité même en présence d'erreurs ionosphériques. Elle protège en outre des effets de la plupart des multitrajets.

A cette fin, l'invention divulgue un système de navigation d'un mobile comprenant un premier module de positionnement par traitement de mesures de capteurs inertiels, un second module de positionnement comprenant au moins un récepteur radiofréquence multi-canaux, chaque canal étant apte à acquérir et poursuivre au moins une porteuse reçue d'un satellite, à en mesurer la phase et à en démoduler le signal pour restituer au moins un code de modulation, et un module de calcul de solutions de navigation par hybridation dans au moins un filtre de Kalman des résultats du premier module avec ceux du second module, caractérisé en ce que le module de calcul de la solution de navigation inclut dans l'hybridation au moins une mesure d'incrément de chemin réalisée sur au moins un canal par intégration des mesures de la phase de porteuse poursuivie par ledit canal. Avantageusement, au moins une des variables du vecteur d'état d'au moins un des filtres de Kalman du système de navigation selon l'invention représente une partie des erreurs sur les mesures de code et de phase du deuxième module de positionnement dues à la traversée des couches ionosphériques de l'atmosphère.

Avantageusement, la ou les variables d'état représentant une partie des erreurs sur les mesures de code et de phase du deuxième module de positionnement dues à la traversée des couches ionosphériques de l'atmosphère sont choisies dans le groupe comprenant le biais ionosphérique sur la mesure du code, le biais ionosphérique sur la mesure de la phase et la variation de l'environnement ionosphérique.

Avantageusement, une partie des erreurs sur les mesures de code et de phase du deuxième module de positionnement dues aux multi-trajets des signaux reçus par le système de navigation selon l'invention sont modélisées dans le module de calcul de la solution de navigation par deux états, un pour le code et un pour la phase.

Avantageusement, une au moins des variables du vecteur d'état d'au moins un des filtres de Kalman du système de navigation selon l'invention représente au moins partiellement une partie des erreurs sur les mesures de code et de phase du deuxième module de positionnement dues aux erreurs de l'horloge satellite et des éphémérides transmis par les satellites. Avantageusement, les erreurs internes du récepteur du système de navigation selon l'invention comprennent l'erreur due à l'horloge du récepteur, l'erreur due au bruit thermique dudit récepteur et l'erreur résiduelle due aux boucles de traitement dudit récepteur.

Avantageusement, les erreurs des boucles de traitement du système de navigation selon l'invention dues à la dynamique de l'aéronef sont corrigées en élargissant la plage de variance du bruit de boucle en fonction de ladite dynamique.

Avantageusement, les erreurs de PLL du système de navigation selon l'invention dues à l'impact d'un signal bruité sont prises en compte en rejetant les variations de mesure de phase correspondant à un faible rapport signal sur bruit.

Avantageusement, les modalités de gestion des canaux du récepteur du système de navigation selon l'invention permettent à ceux-ci de fournir des mesures répondant à des critères de qualité paramétrables.

Avantageusement, les mesures d'un canal du système de navigation selon l'invention ne sont utilisées qu'après un délai choisi après la réception de l'indication du statut de disponibilité dudit canal.

Avantageusement, les mesures d'un canal du système de navigation selon l'invention ne sont utilisées qu'au-delà de seuils choisis d'élévation du satellite poursuivi et de rapport signal à bruit du signal reçu.

Avantageusement, les résultats du module de calcul de la solution de navigation sont fournis au premier module de positionnement du système de navigation selon l'invention pour en corriger les mesures.

Avantageusement, le système de navigation selon l'invention comprend N filtres de Kalman en plus du au moins un filtre de Kalman d'hybridation, un par canal correspondant à un satellite à vue.

Avantageusement, les N filtres de Kalman du système de navigation selon l'invention sont utilisés pour le calcul des rayons de protection horizontal et vertical de la solution de navigation.

Avantageusement, les résultats du module de calcul du système de navigation selon l'invention ne sont pas fournis au deuxième module pour en modifier les mesures.

Avantageusement, le système de navigation selon l'invention comprend au moins un corrélateur étroit à double delta.

Avantageusement, une solution partielle de navigation est calculée en sortie du deuxième module de positionnement du système de navigation selon l'invention avant d'être hybridée avec les sorties du premier module de positionnement.

Avantageusement, le deuxième module de positionnement du système de navigation selon l'invention comprend en outre un capteur de mesure baroaltimétrique.

Avantageusement, une au moins des variables du vecteur d'état d'au moins un des filtres de Kalman du système de navigation selon l'invention représente une partie des erreurs sur les mesures du capteur baro-altimétrique.

Avantageusement, une au moins des variables du vecteur d'état d'au moins un des filtres de Kalman du système de navigation selon l'invention représente une partie des erreurs sur les mesures des capteurs inertiels.

L'invention divulgue également un procédé de navigation d'un mobile comprenant une première étape de positionnement par traitement de mesures de capteurs inertiels, une seconde étape de positionnement comprenant au moins une étape de réception radiofréquence multi-canaux, chaque canal étant apte à acquérir et poursuivre au moins une porteuse reçue d'un satellite, à en mesurer la phase et à en démoduler le signal pour restituer au moins un code de modulation, et une étape de calcul de solutions de navigation par hybridation dans au moins un filtre de Kalman des résultats de la première étape avec ceux de la seconde étape, caractérisé en ce que l'étape de calcul de la solution de navigation inclut dans l'hybridation au moins une mesure d'incrément de chemin réalisée sur au moins un canal par intégration des mesures de la phase de porteuse poursuivie par ledit canal.

L'invention présente en outre l'avantage que les corrections effectuées sur les erreurs des capteurs inertiels et du récepteur GNSS viennent en complément des corrections prévues par les normes ARINC et RTCA et sont donc facilement cohérentes avec elles.

L'invention sera mieux comprise et ses différentes caractéristiques et avantages ressortiront de la description qui suit de plusieurs exemples de réalisation et de ses figures annexées dont :

- La figure 1 représente l'architecture générale d'un système de navigation à hybridation GNSS/capteurs inertiels ;
- La figure 2 représente l'architecture d'un système de navigation à hybridation GNSS/capteurs inertiels en boucle ouverte ;
- La figure 3 représente l'architecture d'un système de navigation à hybridation GNSS/capteurs inertiels en boucle fermée ;
- La figure 4 représente l'organigramme des traitements d'un système de navigation à hybridation GNSS/capteurs inertiels en boucle fermée selon l'invention;

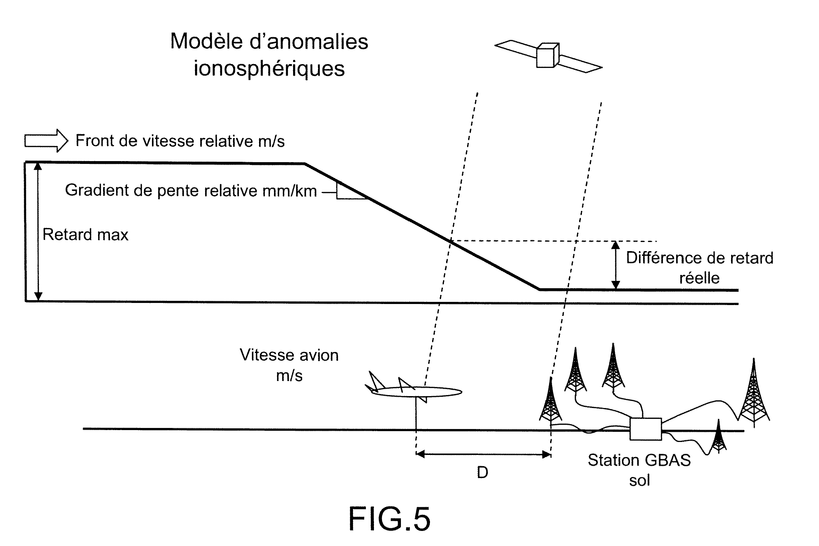

- La figure 5 illustre un cas d'anomalie locale de la ionosphère (front) qui induit une mauvaise correction ionosphérique en GBAS.
- Les figures 6A et 6B illustrent l'amélioration apportée par l'invention sur la précision des mesures hybridées par rapport aux mesures GNSS, respectivement dans le plan horizontal et dans la direction verticale ;
- La figure 7 illustre les modalités de gestion de l'intégrité dans un système de navigation à hybridation GNSS/capteurs inertiels.

Sauf mention contraire, dans la description et les figures, les sigles, acronymes et abréviations ont la signification en français et en anglais indiquée dans le tableau ci-dessous :

| Sigle/Acronyme | Signification |
|---|---|
| ABAS | Airborne Based Augmentation System ou Système à précision améliorée par le segment avion |
| ACP | Accumulated Carrier Phase ou Cumul de la phase de la porteuse |
| ARINC | Aeronautical Radio, Incorporated |
| C/A | Coarse/Acquisition Code ou Code d'acquisition grossière |

(suite)

| Sigle/Acronyme | Signification |
|---|---|
| DDC | Double Delta Correlator ou Corrélateur double delta |
| DLL | Delay-Locked Loop ou Boucle à verrouillage de retard |
| ECEF | Earth Centered Earth Fixed ou Système de coordonnées géocentrées |
| FF | Fault Free ou Sans faute |
| GBAS | Ground Based Augmentation System ou Système à précision améliorée par le segment sol |
| GNSS | Global Navigation Satellite System ou Système global de navigation par satellites |
| GPS | Global Positionning System ou Système de positionnement global |
| IMU | Inertial Measurement Unit ou Unité de mesure inertielle |
| OCXO | Oven Controlled crystal Oscillator ou Oscillateur en crystal contrôlé en température |
| P | Precision code ou Code de Précision |
| PFV | Plate-Forme Virtuelle |
| PQR | Composantes du vecteur rotation |
| PRN | Pseudo Random Noise ou Code pseudo aléatoire |
| PVT | Position Vitesse Temps |
| RNP | Required Navigation Performance ou Qualité de navigation requise |
| RTCA | Radio Technical Commission for Aeronautics ou Commission sur les techniques radio pour l'aéronautique |
| SBAS | Satellite Based Augmentation System ou Système à précision améliorée par le segment satellite |
| SF | Satellite Failure ou Défaillance satellite |
| TCXO | Temperature Compensated crystal Oscillator ou Oscillateur en crystal compensé en température |
| TLM | Telemetry ou Télémétrie |

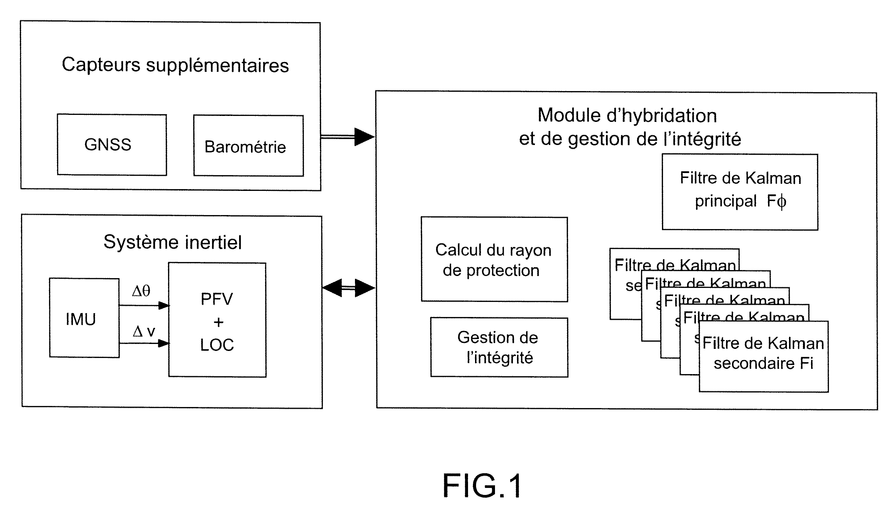

La figure 1 décrit l'architecture de base d'un système de navigation d'aéronef basé sur le calcul d'une solution à partir de capteurs inertiels et d'un système de navigation par satellite. Les capteurs inertiels comprennent principalement un gyroscope trois axes et au moins 3 accéléromètres (IMU, 10). Ces capteurs fournissent une estimation de la variation angulaire de l'orientation spatiale du porteur ($\Delta\theta$) et de son accélération linéaire ($\Delta V$) à une plate-forme virtuelle (PFV) et une unité de calcul de la localisation de l'aéronef (LOC). Les capteurs inertiels produisent des paramètres de navigation qui ne sont pas affectés par des aléas de transmission et sont très précis à court terme mais qui dérivent à long terme.

Ces erreurs des capteurs inertiels doivent être modélisées dans le filtre principal d'hybridation $F_0$ pour être corrigées. La norme ARINC 738 définit le type des erreurs des capteurs inertiels généralement constitués de gyromètres et d'accéléromètres. Les principaux défauts des mesures d'un gyromètre comprennent : la dérive (en degrés par heure) qui est la différence entre les biais de deux mesures à des instants où l'on met le gyromètre en service ; la stabilité en opération (en degrés par heure); la marche aléatoire (en degrés par racine d'heure) qui est le résultat de l'intégration d'un bruit blanc ; le facteur d'échelle (en parties par million) qui représente la variation de la mesure réelle du capteur ; le défaut d'alignement (en micro radians) qui est la différence angulaire entre l'orientation réelle du capteur et son orientation théorique. Les principaux défauts des mesures d'un accéléromètre comprennent : le biais de l'accéléromètre (en g) qui est l'équivalent de la dérive du gyromètre ; la stabilité du biais d'accéléromètre qui est l'équivalent de la stabilité du gyromètre; le facteur d'échelle et le défaut d'alignement, équivalents aux définitions identiques pour le gyromètre ; le bruit. Un certain nombre d'hypothèses standard sont en général faites, conformément aux connaissances de l'homme du métier pour les valeurs des paramètres de ces défauts.

Un système GNSS 210 fournit les pseudo-distances et les pseudo-vitesses par rapport aux satellites en axe à vue depuis le porteur du récepteur (pseudo voulant dire relatives par rapport audit satellite à vue). Ces mesures sont périodiquement recalées en tenant compte de différentes erreurs sur lesquelles nous reviendrons. Nous reviendrons également sur les données issues du récepteur GNSS qui sont utilisées dans les calculs ultérieurs de la solution de navigation.

Les mesures GNSS peuvent être complétées par des mesures baro-altimétriques. Les mesures du baro-altimètre 220 sont très importantes sur un aéronef. Elles alimentent en particulier l'application de gestion du vol. Ces mesures sont en général fournies par plus d'un capteur ce qui permet de vérifier leur cohérence. Une des difficultés est cependant que l'erreur des capteurs baro-altimétriques est dépendante des conditions atmosphériques locales. L'ICAO propose le modèle d'erreur suivant:

$$\sigma_{Zb} = \sqrt{\sigma_0{}^2 + \sigma_{Vert}{}^2 + \sigma_{Hor}{}^2 + \sigma_{Time}{}^2}$$

où

$\sigma_0$ est l'erreur initiale

$\sigma_{Hor} = Kh * \Delta Pos_{hor}$ représente l'influence de la distance horizontale entre la position courante et la dernière position où le biais du baro-altimètre a été identifié. $K_h$ est fixé à la valeur de 0,5 m/Nm.

$\sigma_{Vert} = Kv * \Delta Alt$ représente l'influence de la variation d'altitude depuis la dernière identification du biais du baro-altimètre. $K_v$ est un facteur d'échelle qui dépend de l'altitude et est fixé aux valeurs suivantes:

$K_v$ = 13 $e^{-3}$ m/pied pour une altitude supérieure à 18.000 pieds ;
$K_v$ = 23 $e^{-3}$ m/pied pour une altitude comprise entre 6.000 pieds et 18.000 pieds ;
$K_v$ = 32 $e^{-3}$ m/pied pour une altitude inférieure à 6.000 pieds.
$\sigma_{Time} = Kt * \Delta t$ est la dérive naturelle de l'erreur avec $K_t$ = 15 m/h.

A travers l'hybridation, le récepteur GNSS permet en outre de calibrer le baro-altimètre. L'utilisation d'un recalage sur la mesure baroaltimétrique est particulièrement important en mode de fonctionnement en « coasting » (mode survie), c'est-à-dire lorsqu'un nombre insuffisant de pseudo-mesures GPS est reçu. Il est également possible d'utiliser un baro-altimètre compensé en température pour diminuer les erreurs résiduelles, à la condition de disposer d'une mesure locale de température.

Ceci étant posé, l'hybridation consiste à corriger les mesures des capteurs inertiels grâce à celles des capteurs supplémentaires (GNSS, baro-altimètre). Elle s'effectue principalement dans le filtre de Kalman $F_0$. Un filtre de Kalman comporte un modèle de comportement des variables que l'on veut filtrer. Généralement on applique le filtre aux erreurs, c'est-à-dire aux différences de mesures entre capteurs inertiels et capteurs supplémentaires. Le modèle permet de propager l'erreur pour calculer une erreur prédite que l'on compare à l'observation; le filtre est recalé avec l'innovation calculée à partir de l'écart entre prédiction et observation en tenant compte du gain du filtre. Le plus souvent la propagation utilise des matrices à coefficients linéaires. Il est également possible d'utiliser des filtres de Kalman étendus d'ordre supérieur. Afin de tenir les exigences d'intégrité d'une certification d'aéronef de premier niveau, ce filtre principal est complété par plusieurs filtres de Kalman secondaires Fi, normalement un par axe satellite simultanément à vue. Ce traitement de l'intégrité est assuré à titre principal par un module de calcul du rayon de protection et par un module de supervision de l'intégrité. Les modalités de calcul du rayon de protection sont détaillées plus bas dans les commentaires de la figure 8.

Il y a plusieurs manières de réaliser l'hybridation. On distingue d'abord l'hybridation lâche et l'hybridation serrée. Dans la première, les observations représentent les erreurs entre la solution de navigation inertielle (position, vitesse) et la solution de navigation GPS (position, vitesse), le récepteur ayant préalablement résolu sa solution de navigation à partir des mesures en axes à vue). Dans la deuxième, l'observation est calculée en comparant chaque mesure en axe à vue (venant du récepteur GNSS) à une mesure équivalente en axe à vue calculée à partir de la position inertielle. En ce qui concerne l'observation baro-altimétrique, elle est élaborée en calculant l'erreur entre l'altitude baro-altimétrique et l'altitude hybride (dans le cas de la boucle fermée uniquement). Pour notre invention, la solution d'hybridation serrée s'impose naturellement car on veut pouvoir modéliser les erreurs de mesures GPS dans les axes à vue.

Une autre distinction doit être faite entre l'hybridation en boucle ouverte et l'hybridation en boucle fermée.

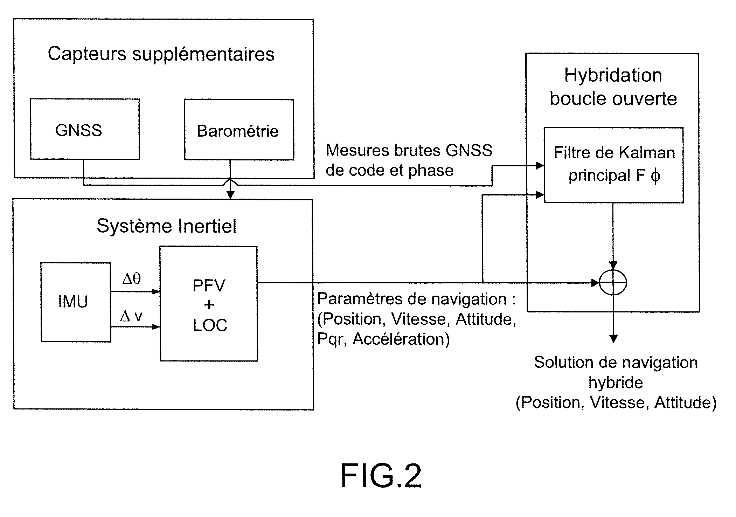

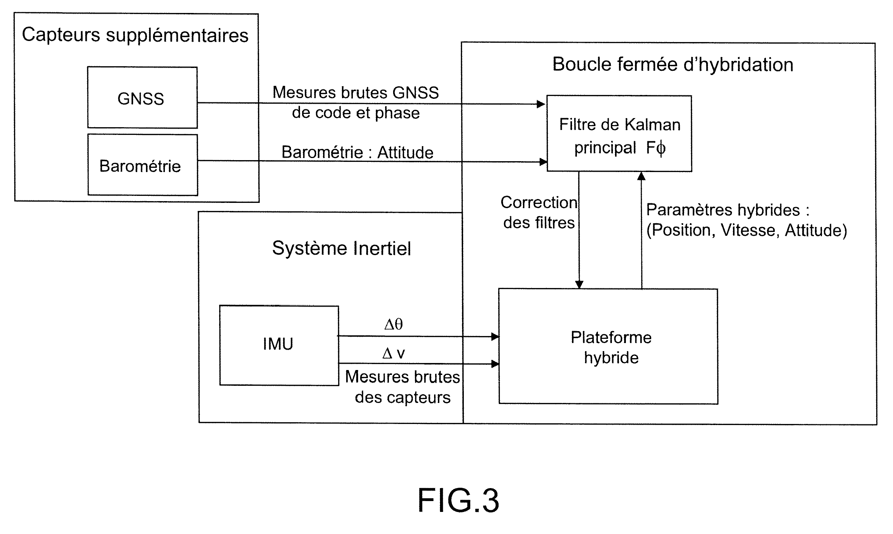

Les deux solutions sont respectivement illustrées par les figures 2 et 3. L'avantage de la solution boucle ouverte est qu'elle peut être implémentée soit dans un calculateur hôte (le calculateur de navigation ou celui de gestion de vol par exemple) ou bien dans la centrale inertielle. Ses inconvénients sont notamment que les observations évoluent de manière non linéaire et que la voie verticale baro-inertielle, qui est déjà hybridée, est difficile à modéliser. L'avantage de la solution boucle fermée est que les erreurs hybrides restent faibles. Son inconvénient est qu'il faut rajouter une unité centrale spécifique pour gérer la plate-forme hybride et que la connaissance des paramètres de l'IMU et des traitements capteurs effectués doit être fine. Une des caractéristiques principales de l'invention, applicable aux deux solutions de boucle ouverte et de boucle fermée est l'utilisation conjointe des mesures de code, qui est classique, et des mesures de phase de porteuse, normalement non utilisée dans les dispositifs d'hybridation de l'art antérieur. On utilise pour la mesure de code les sorties non compensées de pseudo-distance du récepteur GNSS, $PR_{code}$. Cette pseudo-distance permet d'initialiser la pseudo-distance mesurée par la phase de porteuse $PR_{phase}$. Celle-ci est ensuite entretenue par la mesure de phase accumulée (ACP) qui représente de manière très précise l'évolution de la pseudo-distance en l'absence de saut e cycles ou de décrochage de la boucle de phase.

L'équation du modèle d'évolution de la pseudo-distance est le suivant :

$$PR_{code}(t) = PR_{true}(t) + Bias_{Clock(Rx)}(t) + Err_{Iono}(t) + Err_{tropo}(t) + Err_{Mpath,code}(t) + Err_{Ephemeris}(t)$$
$$+ Noise_{Rx,code}(t)$$

où les notations ont les significations suivantes :

- $Bias_{Clock(Rx)}(t)$ : erreur de l'horloge du récepteur fournie par l'oscillateur interne ;
- $Err_{Iono}(t)$ et $Err_{tropo}(t)$ sont les erreurs dues à la traversée des couches atmosphériques (respectivement l'ionosphère et la troposphère) ;
- $Err_{MPath,Code}(t)$ est l'erreur due aux multi-trajets ;
- $Err_{Ephemeris}(t)$ est un composite des erreurs dues aux erreurs relativistes et des erreurs dues aux horloges des satellites, que l'on modélise par un même état global car on ne cherche pas à les dissocier ;
- $Noise_{Rx,Code}(t)$ est le bruit thermique.

Dans une réalisation possible, la pseudo-distance $PR_{phase}$ est initialisée à la valeur de la pseudo-distance issue du code au temps $t_0$ et est ensuite entretenue par l'ACP selon la formule :

$$PR_{phase}(t) = PR_{Code}(t_0) + \sum_{u=t_0}^{t-dt} \Delta PR_{phase}(u)$$

où $\Delta PR_{phase}$ est la mesure de phase et $dt$ est la période d'échantillonnage.

La variation de la mesure de phase ACP devra être calculée avec précision pour éviter une dérive. Le prélèvement de la mesure de phase doit permettre de garantir que l'erreur sur l'incrément de chemin calculé avec la phase peut être modélisée par le bruit de la partie fractionnaire de la phase. L'équation fournissant la phase peut être développée de la manière suivante :

$$\sum_{u=t_0}^{t-dt} \Delta PR_{phase}(u) = PR_{true}(t) - PR_{true}(t_0) + Bias_{Clock(Rx)}(t) - Bias_{Clock(Rx)}(t_0) - (Err_{Iono}(t) - Err_{Iono}(t_0))$$
$$+ Err_{Tropo}(t) - Err_{Tropo}(t_0) + Err_{Mpath,Phase}(t) + Err_{Ephemeris}(t) + Noise_{Rx,Phase}(t)$$

En définitive, la pseudo-distance calculée avec l'ACP peut être écrite :

$$PR_{phase}(t) = PR_{true}(t) + Bias_{Clock(Rx)}(t) + Err_{Iono}(t_0) - (Err_{Iono}(t) - Err_{Iono}(t_0)) + Err_{tropo}(t) +$$
$$Err_{Mpath,Code}(t_0) + Err_{Ephemeris,Code}(t_0) + Noise_{Rx,Code}(t_0) + Err_{Mpath,Phase}(t) + Err_{Ephemeris}(t)$$
$$+ Noise_{Rx,Phase}(t)$$

On notera que dans cette équation, certaines erreurs sont spécifiques de la phase (notamment l'erreur de multi-trajets et le bruit, qui sont différents entre les pseudo-distances issues du code et de la phase ; elles sont désignées par des notations spécifiques $Err_{Code}$ or $Err_{Phase}$ dans les équations). Les autres erreurs telles que les erreurs atmosphériques (dues à la traversée de l'ionosphère et de la troposphère), l'erreur d'éphémérides et l'erreur due à l'horloge du récepteur sont communes entre les deux mesures de pseudo-distance par le code et par la phase.

La pseudo-distance mesurée par le code peut être écrite de la manière suivante :

$$PR_{code}(t) = PR_{true}(t) + Bias_{Clock(Rx)}(t) + Err_{Iono}(t_0) + Err_{Iono}(t) - Err_{Iono}(t_0) + Err_{tropo}(t) + Err_{Mpath,code}(t) +$$
$$Err_{Ephemeris}(t) + Noise_{Rx,code}(t)$$

La norme DO229 définit des corrections à appliquer aux mesures pour aboutir à une performance du récepteur GNSS/GPS conforme aux prescriptions. Ces corrections portent sur les erreurs des horloges satellites, l'effet relativiste, la correction des erreurs troposphériques et celle des erreurs ionosphériques. Les modèles de correction de ces erreurs sont connues de l'homme du métier. Selon l'invention, ces corrections sont appliquées à la fois aux mesures de code et aux mesures de phase. Pour la correction des erreurs des horloges satellites, nous appliquons l'erreur absolue sur le code et la dérive de l'erreur sur la phase. Pour l'effet relativiste, les erreurs troposphériques et ionosphériques, nous appliquons l'erreur brute sur le code et la variation des erreurs entre deux mesures sur la phase. On notera que les corrections d'erreurs ionosphériques sont de signes opposés pour le code et pour la phase. Ainsi, le filtre est capable de suivre l'évolution ionosphérique et d'identifier l'erreur initiale. Ces corrections sont effectuées à partir des données fournies par le récepteur GNSS (éphémérides, données transmises par le récepteur GNSS pour la correction des erreurs ionosphériques...).

Ainsi, la dernière équation ci-dessus est transformée de telle manière que les erreurs indiquées peuvent être considérées comme les erreurs résiduelles après les corrections données par les modèles d'erreur.

Dans un récepteur GPS, lorsque l'on utilise seulement le code C/A, ce qui est le cas des applications civiles, les erreurs résiduelles dues aux multi-trajets et à la traversée de la couche ionosphérique ont un impact important sur la performance globale du récepteur. Il faut en tenir compte de manière spécifique dans la définition du modèle du filtre pour réduire leur effet sur la solution hybridée de navigation.

En ce qui concerne les multi-trajets, une manière de réduire l'erreur est d'utiliser un corrélateur à bande étroite, notamment du type à double delta. Un corrélateur à bande étroite combine une bande d'acquisition large et un espacement des codes de réplication étroit. Le bruit des mesures est réduit dans un corrélateur à bande étroite de ce type parce que les composantes des signaux en avance et en retard sont corrélées et ont tendance à se compenser quand les signaux en avance et en retard sont simultanés. Dans ce cas, la DLL de discrimination est en effet moins perturbée par les multi-trajets en retard. Un corrélateur étroit de type double delta comporte une fonction de corrélation qui est une combinaison linéaire de deux fonctions réduites de corrélation :

$$\Delta\Delta(d) = 2^*EL(d/2)-EL(d)$$

où EL(d) est le schéma de corrélation correspondant à un retard d'un chip C/A. La combinaison linéaire ci-dessus a un schéma de corrélation qui a une réponse non nulle autour du point de poursuite très courte, ce qui réduit l'interférence des multi-trajets sur la poursuite de manière drastique. Cependant, cette technique ne permet pas non plus de corriger suffisamment les multi-trajets de proximité dus aux réflexions des signaux arrivant sur l'antenne sur la surface de l'avion. Des techniques complémentaires de résolution des erreurs sont donc nécessaires, comme indiqué plus loin.

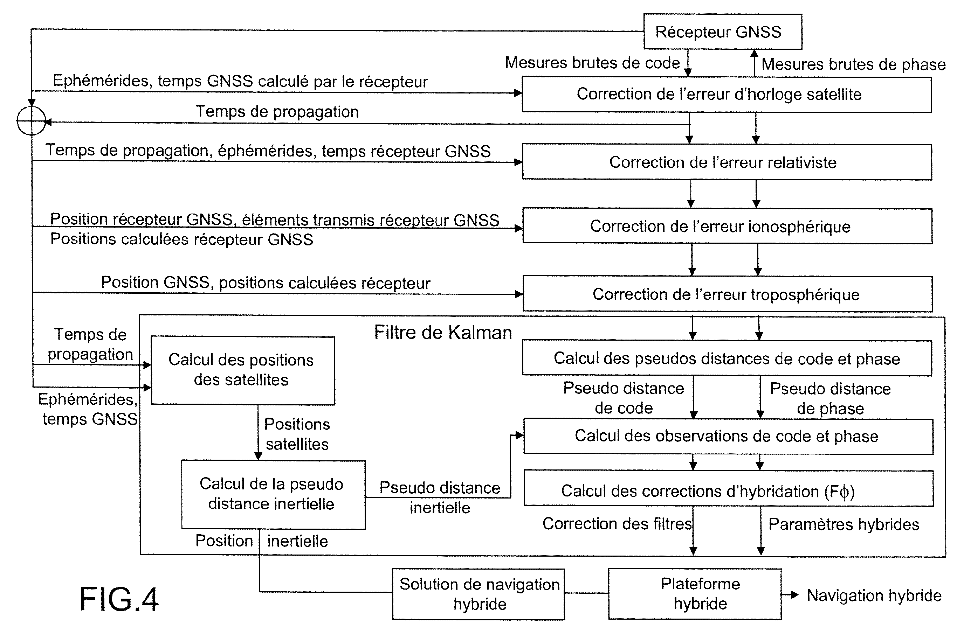

Les organigrammes des traitements appliqués pour les corrections d'erreurs dans le cas d'une architecture d'hybridation à boucle fermée sont représentés sur la figure 4.

Les observations fournies au filtre de Kalman $F_0$ sont les différences entre les mesures GNSS et des mesures équivalentes calculées avec des données inertielles. Comme déjà indiqué, dans une boucle ouverte, les mesures inertielles sont celles qui sont fournies par la PFV et qui ne sont en aucune manière corrigées par les mesures GNSS. Dans une boucle fermée, les mesures inertielles sont corrigées, dans la plate-forme d'hybridation, en tenant compte des observations GNSS calculées par le filtre. Dans les deux architectures, le processus comporte les mêmes trois étapes : d'abord, calcul et application des différentes corrections à apporter aux mesures brutes de code et de phase fournies par le récepteur GNSS (un ensemble de mesures par axe satellite à vue) pour en déduire les pseudo-distances de code et de phase ; alternativement, on peut utiliser les mesures compensées en sortie du récepteur GNSS, mais dans ce cas il faut s'assurer que ces corrections sont conformes à la norme DO229 et qu'elles sont cohérentes en phase et en code ; ensuite, calcul des observations de code et de phase par comparaison avec les mesures issues de la centrale inertielle; enfin calcul des corrections hybrides à appliquer au filtre.

Dans la suite de la description, on fournit, pour un mode de réalisation de l'invention les variables du vecteur d'état du filtre, le modèle de propagation, et le modèle de recalage. Les différents modèles de correction d'erreurs figurant sur la figure 4 sont ensuite détaillés.

Le vecteur d'état du filtre de Kalman représente les erreurs de navigation hybrides, les erreurs principales des capteurs inertiels et les erreurs de mesures des capteurs supplémentaires (GNSS et baro-altimètre). Le tableau ci-dessous indique, à titre d'exemple, les variables d'état qui peuvent être utilisées pour représenter un modèle de propagation conforme à un des modes de réalisation de l'invention ; ces variables sont choisies à titre purement illustratif ; on pourrait en particulier modifier ce mode de réalisation en modélisant de manière plus fine les défauts inertiels (stabilité, facteurs d'échelle et défauts d'alignement), mais cela n'apporterait pas de véritable gain dans le contexte de l'invention.

| Variables | Signification |
|---|---|
| $\delta\psi_x, \delta\psi_y, \delta\psi_z$ | Erreurs hybrides des « tilt angles » dans le repère plateforme |
| $\delta V_x, \delta V_y, \delta V_z$ | Erreurs hybrides de vitesse dans le repère plateforme |
| $\delta\Theta_x, \delta\Theta_y$ | Erreurs hybrides de position dans le repère plateforme |
| $\delta h$ | Erreur hybride d'altitude |
| $G_x, G_y, G_z$ | Dérive du gyromètre dans le référentiel de la centrale inertielle |
| $B_x, B_y, B_z$ | Dérive de l'accéléromètre dans le référentiel de la centrale inertielle |
| $\delta Zb$ | Biais du baro-altimètre |
| $Ag_x, Ag_y, Ag_z$ | Anomalie de la gravité |
| $Bh$ | Biais d'horloge du récepteur |
| $Dh$ | Dérive d'horloge du récepteur |
| $Ah$ | Accélération de l'horloge du récepteur |
| $Bic_n$ | Biais ionosphérique initial sur la pseudo-distance de code du canal n |
| $Bmc_n$ | Erreur de multi-trajet sur le code pour le canal n |
| $Bip_n$ | Biais initial de la pseudo-distance de phase sur le canal n |
| $Bmp_n$ | Erreur de multi-trajet sur la phase pour le canal n |
| $Ci_n$ | Variation de l'erreur ionosphérique sur le canal n (erreur commune code et phase) |
| $Ct_n$ | Variation de l'erreur troposphérique sur le canal n (erreur commune code et phase) |
| $Cep_n$ | Variation de l'erreur d'éphémérides sur le canal n (erreur commune code et phase) |

Pour présenter le modèle de propagation utilisé dans ce mode de réalisation de l'invention, on définit les variables et paramètres suivants:

$V_X, V_Y, V_Z$ vitesse (dans le repère plateforme)

$F_X, F_Y, F_Z$ forces spécifiques (dans le repère plateforme)

$\Omega_X, \Omega_Y, \Omega_Z$ rotation de la terre (dans le repère plateforme)

$q_1\ q_2\ q_3\ q_4$ composantes quaternion

p, q, r composantes du vecteur rotation

Z altitude

$dt$ période d'échantillonnage

$K_{b1}\ K_{b2}\ K_{b3}$ coefficients de gain du filtre baro-inertiel (Boucle ouverte seulement)

Sont également définis les termes composés suivants

$$a_1 = \frac{V_X}{Rt+Z} - \Omega_Y,\ a_2 = \frac{V_Y}{Rt+Z} + \Omega_X,\ a_3 = \frac{1}{Rt+Z},\ a_4 = \Omega_Z$$

$$M = \begin{pmatrix} \dfrac{q_1^2 + q_2^2 - q_3^2 - q_4^2}{q_1^2 + q_2^2 + q_3^2 + q_4^2} & \dfrac{2(q_2 q_3 - q_1 q_4)}{q_1^2 + q_2^2 + q_3^2 + q_4^2} & \dfrac{2(q_2 q_4 + q_1 q_3)}{q_1^2 + q_2^2 + q_3^2 + q_4^2} \\[3mm] \dfrac{2(q_2 q_3 + q_1 q_4)}{q_1^2 + q_2^2 + q_3^2 + q_4^2} & \dfrac{q_1^2 - q_2^2 + q_3^2 - q_4^2}{q_1^2 + q_2^2 + q_3^2 + q_4^2} & \dfrac{2(q_4 q_3 - q_1 q_2)}{q_1^2 + q_2^2 + q_3^2 + q_4^2} \\[3mm] \dfrac{2(q_2 q_4 - q_1 q_3)}{q_1^2 + q_2^2 + q_3^2 + q_4^2} & \dfrac{2(q_4 q_3 + q_1 q_2)}{q_1^2 + q_2^2 + q_3^2 + q_4^2} & \dfrac{q_1^2 - q_2^2 - q_3^2 + q_4^2}{q_1^2 + q_2^2 + q_3^2 + q_4^2} \end{pmatrix}$$

On utilise également dans le modèle de propagation un certain nombre de constantes connues telles que g, la constante de gravité, et $K_2$, la correction de la gravité en fonction de l'altitude. Un certain nombre de paramètres $\tau_x$ de réglage permettent également d'optimiser le modèle. Ils peuvent être déterminés par simulation ou par essai et sont fournis par le tableau suivant :

| Sigle | Signification |
|---|---|
| $\tau_{ACCELERO}$ | Constante de temps liée à la stabilité du biais de l'accéléromètre |
| $\tau_{GYRO}$ | Constante de temps liée à la stabilité de la dérive du gyromètre |
| $\tau_{GRAVITY}$ | Constante pour le modèle d'anomalie de gravité |
| $\tau_{IONO, n}$ | Constante pour le calcul de la variation d'erreur ionosphérique pour le canal n |
| $\tau_{TROPO, n}$ | Constante pour le calcul de la variation d'erreur troposphérique pour le canal n |
| $\tau_{Ephemeris, n}$ | Constante pour le calcul de la variation d'erreur d'éphémérides pour le canal n |
| $\tau_{MULTIPATH, Code}$ | Constante pour le calcul de l'erreur de multi-trajet sur le code |
| $\tau_{MULTIPATH, Phase}$ | Constante pour le calcul de l'erreur de multi-trajet sur la phase |

Les équations de propagation sont alors les suivantes, en notant que les variables d'état avant propagation figurent dans la partie droite des équations et les variables d'état après propagation figurent dans la partie gauche des équations:

$$\delta\psi_X = \delta\psi_X + dt(a_4\delta\psi_Y + a_1\delta\psi_Z + M(1,1)*G_X + M(1,2)*G_Y + M(1,3)*G_Z)$$

$$\delta\psi_Y = \delta\psi_Y + dt(-a_4\delta\psi_X + a_2\delta\psi_Z + M(2,1)*G_X + M(2,2)*G_Y + M(2,3)*G_Z)$$

$$\delta\psi_Z = \delta\psi_Z + dt(-a_1\delta\psi_X - a_2\delta\psi_Y + M(3,1)*G_X + M(3,2)*G_Y + M(3,3)*G_Z)$$

$$\delta V_X = \delta V_X + dt(F_Z\delta\psi_Y - F_Y\delta\psi_Z + F_Z\delta\theta_Y + M(1,1)*B_X + M(1,2)*B_Y + M(1,3)*B_Z + Ag_X)$$

$$\delta V_Y = \delta V_Y + dt(-F_Z\delta\psi_X + F_X\delta\psi_Z - F_Z\delta\theta_X + M(2,1)*B_X + M(2,2)*B_Y + M(2,3)*B_Z + Ag_Y)$$

Les traitements de la variation de vitesse verticale et de la variation d'altitude en boucle fermée sont:

$$\delta V_Z = \delta V_Z + dt[M(3,1)*B_X + M(3,2)*B_Y + M(3,3)*B_Z + Ag_z - K_2\delta h]$$

$$\delta h = -\delta V_Z dt$$

Sur la voie horizontale

$$\delta\theta_X = \delta\theta_X + a_{31} dt \delta V_Y$$

$$\delta\theta_Y = \delta\theta_Y - a_{32} dt \delta V_X$$

Pour les mesures du gyromètre et de l'accéléromètre, un exemple d'équations de propagation est donné ci-dessous, étant entendu que plusieurs modèles d'erreurs capteurs peuvent être combinés avec l'invention sans modifier celle-ci:

$$G_{(X,Y,Z)} = \exp(-\frac{dt}{\tau_{GYRO}})G_{(X,Y,Z)} \text{ et } B_{(X,Y,Z)} = \exp(-\frac{dt}{\tau_{ACCELERO}})B_{(X,Y,Z)}$$

Pour la correction de gravité:

$$Ag_X = \exp(-\frac{dt}{\tau_{gravite}})Ag_X \text{ , } Ag_Y = \exp(-\frac{dt}{\tau_{gravite}})Ag_Y \text{ } Ag_Z = \exp(-\frac{dt}{\tau_{gravite}})Ag_Z$$

Pour la propagation des erreurs de mesure de code et de phase, on peut utiliser par exemple des modèles de Markov, du 1er ordre ou d'ordre supérieur, notamment pour la variation ionosphérique et on a également, pour n fonction du nombre de canaux:

Termes communs:

$$\text{Variation Ionosphere} : Ci_n = \exp(-\frac{dt}{\tau_{Iono,n}})Ci_n$$

$$\text{Variation Ephemerides} : Cep_n = \exp(-\frac{dt}{\tau_{Ephemeris,n}})Cep_n$$

$$\text{Variation Troposphere} : Ct_n = \exp(-\frac{dt}{\tau_{Tropo,n}})Ct_n$$

Code uniquement:

$$\text{Multitrajets} : Bmc_{Code,n} = \exp(\frac{-dt}{\tau_{Multipath,code,n}})Bmc_{Code,n}$$

Phase uniquement:

$$\text{Multitrajets} : Bmp_{Phase,n} = \exp(\frac{-dt}{\tau_{Multipath,phase,n}})Bmp_{Phase,n}$$

Le filtre de Kalman est recalé par les observations des différences entre mesures inertielles et mesures GNSS, celles-ci comportant les mesures de pseudo-distances par le code et par l'incrément de chemin (phase), notées respectivement $RawPR_i^{Code}$ et $\sum Raw\Delta PR_i^{Phase}$ .

L'algorithme reçoit une pseudo-distance qui est corrigée en utilisant les modèles définis par la norme RTCA DO 229 dont les résultats laissent subsister des erreurs résiduelles dont le traitement est détaillé dans la suite de la description :

- Corrections des horloges satellites: af0,af1,af2 , Tgd (Temps de propagation de groupe) et effet relativiste:

$$Cor_i^{ClockSat} + Cor_i^{Re\,lativistic}$$

- Corrections de l'erreur due à la troposphère : $Cor_i^{Tropo}$

- Correction de l'erreur due à l'ionosphère : $Cor_i^{Iono}$

La pseudo-distance de code compensée est alors:

$$PR_i^{GPS} = RawPR_i^{GPS} + Cor_i^{ClockSat} + Cor_i^{Re\,lativistic} - Cor_i^{Iono} - Cor_i^{Tropo}$$

La mesure de phase compensée est:

$$\Delta PR_i^{Phase} = Raw\Delta PR_i^{Phase} + \Delta Cor_i^{ClockSat} + \Delta Cor_i^{Re\,lativistic} + \Delta Cor_i^{Iono} - \Delta Cor_i^{Tropo}$$

($\Delta Cor_i$ est la variation de la correction $Cor_i$ entre deux itérations)
La pseudo-distance de phase mesurée est calculée en accumulant les mesures de phase compensées. Elle est initialisée avec la pseudo-distance de code compensée. Les pseudo-distances de code et de phase sont ensuite utilisées pour calculer les observations.
L'observation est directement une erreur de pseudo-distance. Selon un mode de réalisation, le vecteur d'observation a 2n+1 coordonnées si n est le nombre d'axes à vue n pour chacune des pseudo-distances (code et phase) et 1 pour le baro-altimètre (soit 21 coordonnées pour 10 axes à vue).

$$Z_{Code,i} = PR_i^{Code} - PR_i^{INS} \quad \text{(observation de code pour le canal i, i variant de 1 à n)}$$

$$Z_{Phase,i} = PR_i^{Phase} - PR_i^{INS} \quad \text{(observation de phase pour le canal i)}$$

$PR_i^{INS}$ est la pseudo-distance calculée à partir de la position inertielle.

$$a_i = PosX_{Sat}^i - PosX_{INS}$$

$$b_i = PosY_{Sat}^i - PosY_{INS}$$

$$c_i = PosZ_{Sat}^i - PosZ_{INS}$$

$$PR_i^{INS} = f(a_i, b_i, c_i) = \sqrt{a_i^2 + b_i^2 + c_i^2}$$

On définit :

$$\delta a = PosX_{TRUE} - PosX_{INS}$$

$$\delta b = PosY_{TRUE} - PosY_{INS}$$

$$\delta c = PosZ_{TRUE} - PosZ_{INS}$$

$$PR_i^{TRUE} = f(a_i - \delta a, b_i - \delta b, c_i - \delta c)$$

Soit en utilisant les résultats déjà présentés:

$$Z_{Code,i} = PR_i^{TRUE} - PR_i^{INS} + Err_{Ephemeris}(t_0) + Err_{Iono}(t_0) + Err_{Tropo}(t_0)$$
$$Err_{Ephemeris}(t) - Err_{Ephemeris}(t_0) + Err_{Mpath,code}(t)$$
$$+ Err_{Iono}(t) - Err_{Iono}(t_0) + Err_{Tropo}(t) - Err_{Tropo}(t_0)$$
$$+ Noise_{Rx,code}(t) + Bias_{Clock(Rx)}(t)$$

et

$$Z_{phase,i} = PR_i^{TRUE} - PR_i^{INS} + Err_{Ephemeris}(t_0) + Err_{Mpath,Code}(t_0) + Err_{Iono}(t_0) + Err_{Tropo}(t_0)$$
$$+ Noise_{Rx,Code}(t_0) + Err_{Ephemeris}(t) - Err_{Ephemeris}(t_0) + Err_{Mpath,Phase}(t) - Err_{Mpath,Phase}(t_0)$$
$$- (Err_{Iono}(t) - Err_{Iono}(t_0)) + Err_{Tropo}(t) - Err_{Tropo}(t_0) + Bias_{Clock(Rx)}(t)$$
$$+ Noise_{Rx,Phase}(t)$$

$$PR_i^{TRUE} - PR_i^{INS} \approx -\alpha_i \delta a - \beta_i \delta b - \gamma_i \delta c$$

$\alpha_i, \beta_i$ et $\gamma_i$ sont les cosinus directeurs de chaque mesure.

$$\alpha_i = a_i / PR_i^{INS} = \frac{\partial f}{\partial a})_{INS}$$

$$\beta_i = b_i / PR_i^{INS} = \frac{\partial f}{\partial b})_{INS}$$

$$\gamma_i = c_i / PR_i^{INS} = \frac{\partial f}{\partial c})_{INS}$$

La pseudo-distance "inertielle" est calculée dans le système de coordonnées géocentrées ECEF ainsi que les positions satellites:

$$PosX_{INS} = (Re - z_{INS}) * \cos(Lat_{INS}) * \cos(Long_{INS})$$

$$PosY_{INS} = (Re - z_{INS}) * \cos(Lat_{INS}) * \sin(Long_{INS})$$

$$PosZ_{INS} = (Re * (1 - e^2) - z_{INS}) * \sin(Lat_{INS})$$

$$PosX_{True} = (Re - z_{True}) * \cos(Lat_{True}) * \cos(Long_{True})$$

$$PosY_{True} = (\text{Re} - z_{True}) * \cos(Lat_{True}) * \sin(Long_{True})$$

$$PosZ_{True} = (\text{Re} * (1 - e^2) - z_{True}) * \sin(Lat_{True})$$

$$\text{Re} = \frac{R_0}{\sqrt{1 - e^2 \sin^2(Lat)}}$$

(Avec $R_0$ constante égale à 6378137 mètres)

On définit également:

$$\delta Lat = Lat_{True} - Lat_{INS}$$

$$\delta Long = Long_{True} - Long_{INS}$$

$$\delta z = z_{True} - z_{INS}$$

On a donc:

$$PR_i^{TRUE} - PR_i^{INS} = -\delta Lat * h\_Lat - \delta Long * h\_Long + \delta z * h\_Alt$$

avec:

$$h\_Lat = \alpha_i \frac{\partial PosX}{\partial Lat})_{INS} + \beta_i \frac{\partial PosY}{\partial Lat})_{INS} + \gamma_i \frac{\partial PosZ}{\partial Lat})_{INS}$$

$$h\_Long = \alpha_i \frac{\partial PosX}{\partial Long})_{INS} + \beta_i \frac{\partial PosY}{\partial Long})_{INS} + \gamma_i \frac{\partial PosZ}{\partial Long})_{INS}$$

$$h\_Alt = -\alpha_i \frac{\partial PosX}{\partial z})_{INS} - \beta_i \frac{\partial PosY}{\partial z})_{INS} - \gamma_i \frac{\partial PosZ}{\partial z})_{INS}$$

On peut écrire:

$$\frac{\partial PosX}{\partial Long})_{INS} = -(\text{Re} - z_{INS}) * \cos(Lat_{INS}) * \sin(Long_{INS})$$

$$\frac{\partial PosX}{\partial z})_{INS} = -\cos(Lat_{INS}) * \cos(Long_{INS})$$

$$\frac{\partial PosY}{\partial Long})_{INS} = (\text{Re} - z_{INS}) * \cos(Lat_{INS}) * \cos(Long_{INS})$$

$$\frac{\partial PosY}{\partial z})_{INS} = -\cos(Lat_{INS}) * \sin(Long_{INS})$$

$$\frac{\partial PosZ}{\partial Long})_{INS} = 0$$

$$\frac{\partial PosZ}{\partial z})_{INS} = -\sin(Lat_{INS})$$

En supposant que l'erreur sur Re est faible en fonction de la latitude:

$$\frac{\partial PosX}{\partial Lat})_{INS} = -(\text{Re} - z_{INS}) * \sin(Lat_{INS}) * \cos(Long_{INS})$$

$$\frac{\partial PosY}{\partial Lat})_{INS} = -(\text{Re} - z_{INS}) * \sin(Lat_{INS}) * \sin(Long_{INS})$$

$$\frac{\partial PosZ}{\partial Lat})_{INS} = (\text{Re} * (1 - e^2) - z_{INS}) * \cos(Lat_{INS})$$

Les erreurs de la position hybride ($\delta\theta_x$ et $\delta\theta_y$ dans le vecteur d'état du filtre) sont calculées dans le repère plateforme:

$$\delta Lat = \sin(\alpha)\delta\theta_x + \cos(\alpha)\delta\theta_y$$

$$\delta Long = \frac{1}{\cos(Lat_{INS})}[\sin(\alpha)\delta\theta_y - \cos(\alpha)\delta\theta_x]$$

Où $\delta\theta_x$ et $\delta\theta_y$ sont les différences entre la position hybride et la position réelle. D'autres résolutions sont possibles, notamment au voisinage d'un des pôles terrestres.
Enfin, selon l'équation d'observation d'un filtre de Kalman ($Z = H * X$), on peut écrire pour chaque canal i)

$$H[Z_{Code_i}, \delta\theta_x] = H[Z_{Phase_i}, \delta\theta_x] = -h\_Lat * \sin(\alpha) + h\_long * \cos(\alpha) / \cos(Lat_{INS})$$

$$H[Z_{Code_i}, \delta\theta_y] = H[Z_{Phase_i}, \delta\theta_y] = -h\_Lat * \cos(\alpha) - h\_long * \sin(\alpha) / \cos(Lat_{INS})$$

$$H[Z_{Code_i}, \delta\theta_z] = H[Z_{Phase_i}, \delta\theta_z] = h\_Alt$$

$$H[Z_{Code_i}, Bh] = H[Z_{Phase_i}, Bh] = 1$$

En ce qui concerne les états spécifiques aux mesures de code:

$$H[Z_{code_i}, Bic_i] = 1$$

$$H[Z_{code_i}, Bmc_i] = 1$$

En ce qui concerne les états spécifiques aux mesures de phase:

$$H[Z_{phase_i}, Bip_i] = 1$$

$$H[Z_{phase_i}, Bmp_i] = 1$$

En ce qui concerne les termes communs:

$$H[Z_{code_i}, Ct_i] = H[Z_{phase_i}, Ct_i] = 1$$

$$H[Z_{code_i}, Cep_i] = H[Z_{phase_i}, Cep_i] = 1$$

$$H[Z_{code_i}, Ci_i] = 1 \qquad H[Z_{phase_i}, Ci_i] = -1$$

On prend également en compte l'erreur entre l'altitude hybride et la mesure baro-altimétrique (Altitude standard). Le biais du baro-altimètre est pris en compte dans le modèle :

$$H[Z_{Baro}, \delta z] = 1$$

$$H[Z_{Baro}, \delta Zb] = -1$$

Il faut également gérer les apparitions et disparitions de chacun des satellites sur les différents canaux. Le filtre réalise un équilibre entre les différents états. Un nouveau satellite introduit deux nouvelles mesures (une de code et une de phase) dont les erreurs sont prises en compte dans le vecteur d'état. Pour prendre en compte ces mesures, il faut s'assurer de ne pas modifier l'équilibre déjà effectué. Pour cela, on peut décorréler les nouveaux états en travaillant directement sur la matrice de variance/covariance.

Les réglages des paramètres spécifiques aux erreurs de mesures GPS (variances initiales et bruit de modèle) peuvent être obtenus par un homme du métier à partir du tableau suivant

| Composante du vecteur d'état | Ajustement de Q0 |
|---|---|
| Bh | Fonction de la technologie de l'oscillateur Rx |
| Dh | Fonction de la technologie de l'oscillateur Rx |
| Ah | Fonction de la technologie de l'oscillateur Rx |
| $Bic_n$ | Biais initial PR$_{Code}$: Cette erreur est considérée comme un biais constant |
| $Bip_n$ | Biais initial PR$_{Code}$: Cette erreur est considérée comme un biais constant |
| $Bmc_n$ | $\dfrac{2 \times P_{mpath,code}}{\tau_{mpath,code}}$ Cette composante définit l'impact des multi-trajets sur les mesures de code (elle dépend de la technique de corrélation, DDC ou Avance Retard) |

(suite)

| Composante du vecteur d'état | Ajustement de Q0 |
|---|---|
| $Bmp_n$ | $\dfrac{2 \times P_{mpath,phase}}{\tau_{mpath,phase}}$ Cette composante définit l'impact des multi-trajets sur les mesures de phase |
| $Ci_n$ | $\dfrac{2 \times P_{iono}}{\tau_{iono}}$ Cette composante définit la variation des erreurs dues à la ionosphère |
| $Ct_n$ | $\dfrac{2 \times P_{tropo}}{\tau_{tropo}}$ Cette composante définit la variation des erreurs dues à la troposphère |
| $Cep_n$ | $\dfrac{2 \times P_{ephemeris}}{\tau_{ephemeris}}$ Cette composante définit la variation des erreurs dues aux éphémérides |

| Composante du vecteur d'état | Ajustement de $\sigma$0 |
|---|---|
| Bh | Dépend de la performance de l'oscillateur |
| Dh | Dépend de la performance de l'oscillateur |
| Ah | Dépend de la performance de l'oscillateur |
| Sah | Dépend de la performance de l'oscillateur |
| $Bic_n$ | $\sqrt{\sigma_{Iono}^2 + \sigma_{Tropo}^2 + \sigma_{Ephem}^2}$ |
| $Bip_n$ | $\sqrt{\sigma_{Iono}^2 + \sigma_{Tropo}^2 + \sigma_{Ephem}^2 + \sigma_{MpathCode}^2 + \sigma_{NoiseCode}^2}$ |
| $Bmc_n$ | Erreur de multi-trajet sur le code, dépendante de la technique de correlation, DDC ou Avance/Retard |
| $Bmp_n$ | Erreur de multi-trajet sur la phase |
| $Ci_n$ | La variation est initialisée à une valeur proche de 0 |
| $Ct_n$ | La variation est initialisée à une valeur proche de 0 |
| $Cep_n$ | La variation est initialisée à une valeur proche de 0 |

Le filtre de Kalman calcule l'innovation Y qui est l'écart entre l'observation Z et la valeur prédite (H*X). Le filtre calcule également l'écart type en utilisant l'écart type du bruit et la valeur prédite de la matrice de variance/covariance du vecteur d'état hybride P. Les équations sont les suivantes :

$$Y = Z - H * X$$

$$P_Y = H * P * H^t + R$$

avec *R* qui est la mesure de la variance du bruit. L'innovation *Y*(*i*) est valide si |*Y*(*i*)|² < *K* \* *P*$_Y$ (*i,i*) où K doit être adapté en fonction de la probabilité de fausse alarme qui est acceptée.

Si *Y*(*i*) est valide, il est utilisé pour le recalage.

On revient maintenant sur la description des différentes corrections appliquées aux mesures du récepteur GNSS. On commence par appliquer les corrections prévues par la norme RTCA DO 229 qui ne sont pas décrites ici mais qui sont connues de l'homme de l'art. On traite ensuite les erreurs résiduelles selon les principes de l'invention.

En ce qui concerne d'abord les erreurs ionosphériques, les corrections de la norme laissent subsister des erreurs résiduelles importantes et la pseudo-distance du récepteur GNSS n'est pas la pseudo-distance réelle. Cela produit une divergence entre les mesures de code et de phase et donc une erreur sur la position calculée par le récepteur GNSS. L'erreur résiduelle due à la ionosphère est prise en compte par le vecteur d'état du filtre de Kalman. On utilise 3 états par canal pour décrire cette erreur résiduelle :

- Le biais initial ionosphérique sur la mesure de code ; il faut noter que c'est bien cet état qui prend en compte l'erreur iono initiale sur la mesure de code mais cet état contient d'autre erreurs initiales ;
- Le biais initial ionosphérique sur la mesure de PR$_{phase}$ ; il faut noter que c'est bien cet état qui prend en compte l'erreur ionosphérique initiale sur la mesure de pseudo range calculée avec la phase mais cet état contient d'autre erreurs initiales ;
- La variation de l'environnement ionosphérique.

Comme déjà expliqué, les variations dues à la traversée de la ionosphère sont de signes opposés. On distingue donc le biais et la variation dans le vecteur d'état. En utilisant les observations de code et de phase et la variation dans le vecteur d'état, on peut donc déterminer la variation d'erreur résiduelle. Comme expliqué dans le passage relatif au modèle de propagation du filtre de Kalman, les termes de la matrice de propagation H, la variance initiale P$_0$ et la covariance du bruit Q relatifs au biais initial dû à la ionosphère ainsi que sa variation doivent être correctement adaptés aux caractéristiques des erreurs résiduelles. L'algorithme de traitement des erreurs ionosphériques doit prendre en compte deux scénarios opérationnels :

- Le premier concerne les erreurs qui sont cohérentes avec le modèle d'erreurs résiduelles ;
- Le deuxième concerne les menaces liées au gradient ionosphérique.

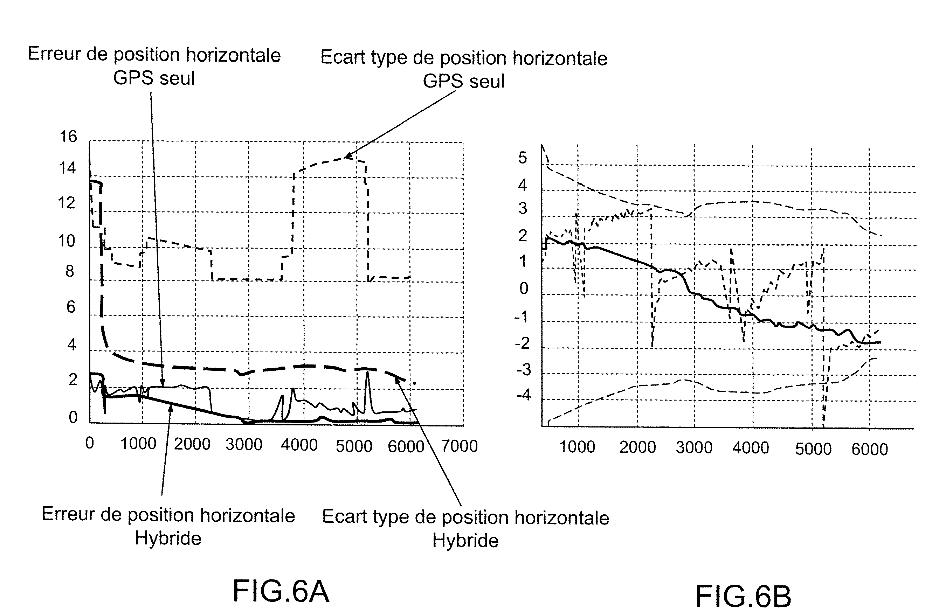

La résolution des menaces liées au gradient ionosphérique est un des problèmes principaux à traiter pour assurer l'intégrité voulue pour une approche de précision. Cette résolution est effectuée de manière différente selon le système d'amélioration de la précision du système GNSS qui est utilisé (GBAS, SBAS ou ABAS). Dans le cas des systèmes GBAS et SBAS, des corrections des erreurs ionosphériques sont fournies par les stations sol ou par les satellites. La figure 6 illustre un cas où un gradient local affecte l'aéronef durant son vol. Dans ce cas, les corrections fournies par les systèmes GBAS et SBAS ne sont pas adaptées et des erreurs résiduelles demeurent qui augmentent l'erreur de position du récepteur GNSS. Dans le cas où l'aéronef utilise une hybridation avec un système ABAS, le vecteur d'état du filtre de Kalman reçoit les corrections faites à bord qui prennent en compte le gradient local. L'erreur réelle peut donc être normalement prise en compte par le filtre. On règle le modèle de manière à ce qu'il puisse encaisser à travers les différents états iono un gradient iono cohérent des gradients observés (ordre de grandeur 10cm/s).

Le contrôle de l'innovation effectué par le filtre, qui a été décrit plus haut, peut également détecter une dérive de gradient ionosphérique s'il est effectué après le recalage de l'erreur résiduelle. Les simulations ont montré le bénéfice de la combinaison des mesures de code et de phase sur le traitement des erreurs ionosphériques.

En ce qui concerne les erreurs dues à la traversée de la couche troposphérique, le modèle de correction de la norme ne laisse pas subsister d'erreurs importantes. Elles sont modélisées à travers un état spécifique par canal. Dans le modèle selon l'invention on sépare donc les erreurs dues à la troposphère, aux éphémérides et aux multi-trajets.

En ce qui concerne les erreurs dues aux horloges et aux éphémérides des satellites, on applique les procédés suivants.

Pour chaque satellite poursuivi identifié par son code PRN, les éphémérides donnent les erreurs d'horloges satellites ainsi que les paramètres des orbites des satellites avec leurs temps de validité. Ces paramètres ne sont pas parfaits, ce qui peut conduire à des erreurs sur les observations Z$_{code}$ et Z$_{phase}$ ; les erreurs d'éphémérides se voient d'une part sur les mesures (horloge satellite) et d'autre part sur les observations (erreurs de position satellite). Ces erreurs sont dues à :

○ Des erreurs sur les paramètres des erreurs des horloges et des orbites des satellites ;
○ Des sauts sur *PR$_{code}$* et *PR$_{phase}$* dus aux mises à jour périodiques des éphémérides lorsque les nouveaux éphémérides sont différents des anciens ; sans correction, lesdits sauts sont soit rejetés par le filtre soit induisent un déséquilibre de ce dernier.

Ces éléments ont été pris en compte dans la conception du filtre de Kalman :

- Pour traiter les erreurs, les erreurs résiduelles sont incluses dans le vecteur d'état et fournies au filtre ;
- Pour traiter les sauts, ce sont les mesures brutes du récepteur GNSS sans correction d'éphémérides qui sont fournies à l'hybridation ; les différentes corrections sont ensuite appliquées ; il est ainsi possible de détecter la mise à jour des éphémérides et d'estimer le saut produit sur la pseudo-distance pour le corriger.

En ce qui concerne les erreurs de multi-trajets, les processus suivants sont appliqués. Les erreurs résiduelles de multi-trajets sont liées à l'environnement de l'aéronef. Ces erreurs sont dues à la réflexion des ondes contenant les signaux satellites sur le sol, sur les bâtiments ou sur la structure de l'avion (cabine de l'aéronef, dérive, ..). Le cas le plus dégradé est celui où l'aéronef est en navigation aéroportuaire en raison des nombreux bâtiments au sol susceptibles de perturber les mesures. Ces erreurs apparaissent si le retard entre l'onde réfléchie et l'onde directe est inférieur à un chip (soit environ 300 m) pour la mesure de code et à la longueur d'onde (soit environ 19 cm) pour la mesure de phase. On voit donc que la mesure de phase est moins sensible aux multi-trajets que la mesure de code, ce qui est un avantage important de l'invention. Sur la mesure de phase, il y a deux types de multi-trajets :

- Les multi-trajets produits par la structure de l'avion; si le multi-trajet a un impact constant sur la mesure de phase, il n'affectera pas le cumul de phase qui est utilisé dans le dispositif selon l'invention ; dans le cas d'une dynamique importante de l'aéronef, le multi-trajet n'est plus constant et son effet peut être représenté par un bruit de Markov d'une amplitude de quelques cm ;
- Les multi-trajets produits par l'environnement extérieur (sol, bâtiments...) ; si l'aéronef est immobile, le multi-trajet produit un biais variant lentement sur la mesure de phase en raison du mouvement des satellites ; si l'aéronef se déplace, le multi-trajet est aléatoire et peut être représenté par un bruit blanc dont l'écart type est de quelques cm.

Dans les deux cas, le multi-trajet peut produire un saut de cycle. Comme il a déjà été indiqué, l'utilisation de corrélateurs à bande étroite, notamment à double delta, réduit l'effet des multi-trajets sur les mesures de code. Il est également possible d'optimiser la position de l'antenne GNSS sur l'aéronef. Il subsiste cependant des erreurs résiduelles. Pour diminuer leur effet, il est possible de ne prendre en compte dans le recalage que les satellites ayant un rapport $C/N_0$ suffisant. Enfin, la prise en compte des erreurs finalement résiduelles est effectuée par les variables d'état représentant lesdites erreurs résiduelles. Les termes de la matrice de propagation du filtre H, de la variance initiale $P_0$ et de la covariance du bruit Q relatifs aux erreurs résiduelles de code et de phase sont ajustés en conséquence.

En ce qui concerne les erreurs internes du récepteur GNSS, les processus suivants sont appliqués. En ce qui concerne tout d'abord l'horloge du récepteur, les corrections nécessaires sur la pseudo-distance et sur sa variation peuvent être paramétrées par l'utilisateur. A titre d'exemple, une dérive en fréquence de 3 ppm/°C (telle que définie par la norme RTCA DO 229) conduit à une erreur de pseudo-distance de 900m/s/°C. On peut utiliser un oscillateur de type OXCO qui aura de meilleures performances qu'un oscillateur de type TCXO. Les erreurs principales du récepteur sont modélisées comme variables d'état fournies au filtre (biais d'horloge récepteur, dérive de l'horloge, accélération de l'horloge, sensibilité à l'accélération du récepteur). Le biais et la dérive initiales de l'horloge récepteur ainsi que leurs variances sont déterminées par calcul des erreurs sur une pseudo-distance initiale GNSS. La variance de l'accélération de l'erreur d'horloge et la sensibilité à l'accélération sont déterminées par les caractéristiques de l'horloge. Pour ces déterminations on utilise les mesures après corrections effectuées par l'algorithme en sortie du récepteur. On prend les mesures corrigées par l'algo (pour enlever essentiellement l'erreur d'horloge sat), on ne prend pas les mesures corrigées par le GPS qui corrige souvent les erreurs de temps.

En ce qui concerne le bruit thermique, les processus suivants de correction sont appliqués.

Le traitement de signal du récepteur et le module HF introduisent un bruit blanc sur les mesures de code et de phase. L'écart type de ce bruit doit être caractérisé avant d'utiliser les mesures dans le filtre. En ce qui concerne le code:

$\sigma_{t,code}$ est l'écart type du bruit thermique affectant le code $\sigma_{t,code} = \lambda_C \sqrt{\dfrac{B_n D}{2 SNR}\left(1 + \dfrac{2}{T\ SNR\ (2-D)}\right)}$ (en m) avec

$\lambda_c$ la longueur du chip (300 mètres)
$B_n$ la largeur de bande du front end
D l'espacement entre les corrélateurs
SNR rapport signal à bruit dans la boucle de code
$T$ le temps d'intégration de prédétection

Pour une corrélation de type DDC, il faut multiplier part $\sqrt{2}$

En ce qui concerne la phase:

$\sigma_{t,phase}$ est l'écart type du bruit thermique affectant la phase $\sigma_{t,phase} = \dfrac{\lambda_L}{2\pi}\sqrt{\dfrac{B_1}{SNR}\left(1+\dfrac{1}{2TSNR}\right)}$ with

$\lambda_L$ est la longueur d'onde de la porteuse
$B_1$ la largeur de bande du bruit de la boucle de porteuse
$SNR$ le rapport signal à bruit dans la PLL
$T$ le temps d'intégration de prédétection

Ce bruit est pris en compte dans les pré et post-traitements du filtre de Kalman :

- Le pré-traitement du signal dans le cas d'utilisation de corrélateurs à bande étroite à double delta : dans ce cas, le bruit du code est faible (paramètre D faible) ;
- Les coefficients de la matrice de bruit du filtre de Kalman sont ajustés pour prendre en compte les bruits de mesure de code et de phase.

En ce qui concerne les erreurs de boucles, les processus suivants de correction sont appliqués. Un récepteur GNSS utilise des DLL et des PLL pour déterminer les mesures de code et de phase. Ces boucles introduisent des erreurs résiduelles pour les raisons suivantes :

- Les évolutions dynamiques créent des latences dans les boucles et donc sur les mesures ;
- Un signal bruité peut créer un saut de cycle sur la PLL ce qui peut la faire décrocher ou bien conduire à une erreur d'un cycle sur la mesure.

Une conception des boucles adaptée à la dynamique prévue de l'aéronef peut réduire ces erreurs. Il est cependant nécessaire de prévoir la prise en compte des résidus de ces erreurs dans le filtre de Kalman :

- Pour faire face à la latence due à la dynamique du porteur, la variance de la mesure de bruit est augmentée en fonction de ladite dynamique ;
- Pour faire face aux sauts de cycle de la boucle de phase, on peut soit éliminer de l'hybridation les canaux ayant un SNR trop faible, soit tester la variation de $PR_{phase}$ pour détecter le glissement de cycle et rejeter les mesures erronées.

Enfin, il est nécessaire de s'assurer de la qualité des mesures en entrée de l'hybridation avant d'effectuer le recalage. Pour ce faire, les adaptations suivantes sont réalisées :

- Pour s'assurer que les signaux sont correctement accrochés, les mesures d'un canal ne sont utilisées que quelques secondes après que l'indication du statut correct dudit canal ait été reçue ;
- Pour s'assurer que la position satellite est suffisamment précise, on attend de recevoir les éphémérides du satellite (on n'utilise pas les almanachs);
- Pour s'assurer que les mesures tirées d'un canal sont suffisamment précises elles ne sont utilisées qu'au delà de seuils d'élévation du satellite correspondant et de SNR du signal reçu.

Toutes ces corrections d'erreurs résiduelles permettent d'obtenir une précision très améliorée des mesures de position de l'aéronef. Ce gain est illustré par les figures 6A et 6B qui comparent respectivement dans le plan horizontal et dans la direction verticale les erreurs et écart types du GPS seul sans hybridation (respectivement traits pleins et pointillés fins) et avec une hybridation selon l'invention (respectivement traits pleins et pointillés épais). La plus grande partie de ce gain est attribuable aux corrections sur les erreurs résiduelles par rapport au modèle DO 229 dues à la traversée des couches ionosphériques qui sont grandement améliorées par l'utilisation dans le filtre de Kalman des mesures de phase du récepteur GNSS.

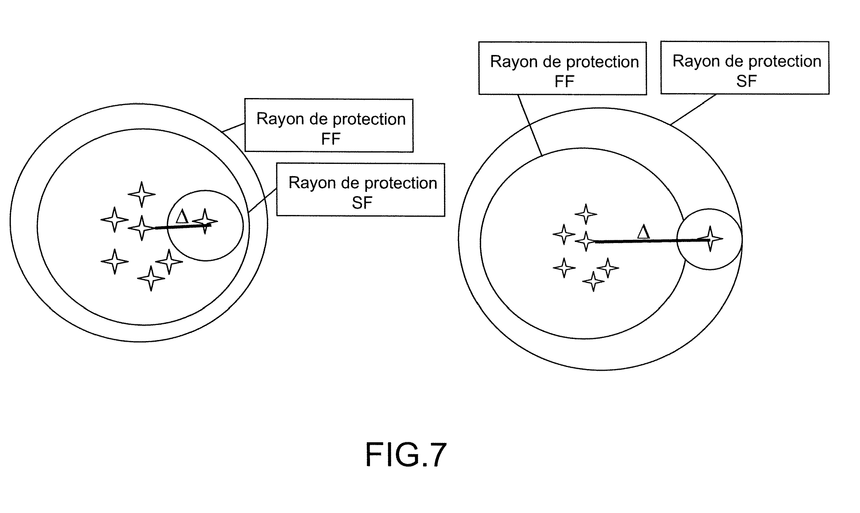

Ce gain de précision induit directement un gain sur les rayons de protection et donc une intégrité améliorée. La figure 7 illustre le calcul des rayons de protection sans faute (FF), qui ne prend en compte que le bruit, et en cas de panne satellite (SF) qui prend en compte :

- La statistique de la différence entre la position hybride principale et la position fournie par le filtre secondaire $F_i$ qui

est la plus écartée de cette position principale ;
- Le bruit de la position fourni par ce filtre $F_i$.

Les rayons de protection horizontale et verticale sont réduits d'environ 25% dans les simulations qui ont été effectués.

Les modes de réalisation qui ont été décrits ne sont pas limitatifs de la portée de la présente invention qui est définie par les revendications qui suivent.

**Revendications**

1. Système de navigation d'un mobile comprenant un premier module (10) de positionnement par traitement de mesures de capteurs inertiels, un second module (20) de positionnement GNSS comprenant au moins un récepteur radiofréquence multi-canaux (210), chaque canal étant apte à acquérir et poursuivre au moins une porteuse reçue d'un satellite, à en mesurer la phase et à en démoduler le signal pour restituer au moins un code de modulation, et un module (30) de calcul de solutions de navigation par hybridation dans au moins un filtre de Kalman (310) des résultats du premier module avec ceux du second module, le module de calcul de la solution de navigation incluant dans l'hybridation, pour un canal donné, au moins un calcul de pseudo-distance de code, au moins une mesure d'incrément de chemin réalisée sur ledit canal par intégration des mesures de la phase de porteuse poursuivie par ledit canal et au moins un calcul de pseudo-distance de phase, initialisée avec la pseudo-distance de code et entretenue par la mesure d'incrément de chemin,
ledit système étant **caractérisé en ce qu'**au moins une des variables du vecteur d'état d'au moins un des filtres de Kalman représente une partie des erreurs sur les mesures de code et de phase du deuxième module de positionnement dues à la traversée des couches ionosphériques de l'atmosphère et **en ce que** les solutions de navigation sont calculées à partir d'observations des différences entre des pseudo-distances calculées à partir des sorties du premier module (10) de positionnement et les pseudo-distances de code et de phase.

2. Système de navigation selon la revendication 1 **caractérisé en ce que** la ou les variables d'état représentant une partie des erreurs sur les mesures de code et de phase du deuxième module de positionnement dues à la traversée des couches ionosphériques de l'atmosphère sont choisies dans le groupe comprenant le biais ionosphérique sur la mesure du code, le biais ionosphérique sur la mesure de la phase et la variation de l'environnement ionosphérique.

3. Système de navigation selon la revendication 1 **caractérisé en ce qu'**une partie des erreurs sur les mesures de code et de phase du deuxième module de positionnement dues aux multi-trajets des signaux reçus sont modélisées dans le module de calcul de la solution de navigation par deux états, un pour le code et un pour la phase.

4. Système de navigation selon la revendication 1 **caractérisé en ce qu'**au moins une des variables du vecteur d'état d'au moins un des filtres de Kalman représente au moins partiellement une partie des erreurs sur les mesures de code et de phase du deuxième module de positionnement dues aux erreurs de l'horloge satellite et des éphémérides transmis par les satellites.

5. Système de navigation selon la revendication 1 **caractérisé en ce que** les erreurs internes du récepteur comprennent l'erreur due à l'horloge du récepteur, l'erreur due au bruit thermique dudit récepteur et l'erreur résiduelle due aux boucles de traitement dudit récepteur.

6. Système de navigation selon la revendication 5 **caractérisé en ce que** les erreurs des boucles de traitement dues à la dynamique de l'aéronef sont corrigées en élargissant la plage de variance du bruit de boucle en fonction de ladite dynamique.

7. Système de navigation selon la revendication 6 **caractérisé en ce que** les erreurs de PLL dues à l'impact d'un signal bruité sont prises en compte en rejetant les variations de mesure de phase correspondant à un faible rapport signal sur bruit.

8. Système de navigation selon la revendication 1 **caractérisé en ce que** les modalités de gestion des canaux du récepteur permettent à ceux-ci de fournir des mesures répondant à des critères de qualité paramétrables.

9. Système de navigation selon la revendication 8 **caractérisé en ce que** les mesures d'un canal ne sont utilisées qu'après un délai choisi après la réception de l'indication du statut de disponibilité dudit canal.

**10.** Système de navigation selon la revendication 8 **caractérisé en ce que** les mesures d'un canal ne sont utilisées qu'au-delà de seuils choisis d'élévation du satellite poursuivi et de rapport signal à bruit du signal reçu.

**11.** Système de navigation selon la revendication 1 **caractérisé en ce que** les résultats du module de calcul de la solution de navigation sont fournis au premier module de positionnement pour en corriger les mesures.

**12.** Système de navigation selon la revendication 11 **caractérisé en ce qu'**il comprend N filtres de Kalman en plus du au moins un filtre de Kalman d'hybridation, un par canal correspondant à un satellite à vue.

**13.** Système de navigation selon la revendication 12 **caractérisé en ce que** les N filtres de Kalman sont utilisés pour le calcul des rayons de protection horizontal et vertical de la solution de navigation.

**14.** Système de navigation selon la revendication 1 **caractérisé en ce que** les résultats du module de calcul ne sont pas fournis au deuxième module pour en modifier les mesures.

**15.** Système de navigation selon la revendication 1 **caractérisé en ce qu'**il comprend au moins un corrélateur étroit à double delta.

**16.** Système de navigation selon la revendication 1 **caractérisé en ce qu'**une solution partielle de navigation est calculée en sortie du deuxième module de positionnement avant d'être hybridée avec les sorties du premier module de positionnement.

**17.** Système de navigation selon la revendication 1 **caractérisé en ce que** le deuxième module de positionnement comprend en outre un capteur de mesure baro-altimétrique.

**18.** Système de navigation selon la revendication 1 **caractérisé en ce qu'**au moins une des variables du vecteur d'état d'au moins un des filtres de Kalman représentent une partie des erreurs sur les mesures du capteur baro-altimétrique.

**19.** Système de navigation selon la revendication 1 **caractérisé en ce qu'**au moins une des variables du vecteur d'état d'au moins un des filtres de Kalman représentent une partie des erreurs sur les mesures des capteurs inertiels.

**20.** Procédé de navigation d'un mobile comprenant une première étape de positionnement par traitement de mesures de capteurs inertiels, une seconde étape de positionnement comprenant au moins une étape de réception radiofréquence multi-canaux GNSS, chaque canal étant apte à acquérir et poursuivre au moins une porteuse reçue d'un satellite, à en mesurer la phase et à en démoduler le signal pour restituer au moins un code de modulation, et une étape de calcul de solutions de navigation par hybridation dans au moins un filtre de Kalman des résultats de la première étape avec ceux de la seconde étape, l'étape de calcul de la solution de navigation incluant dans l'hybridation, pour un canal donné, au moins un calcul de pseudo-distance de code, au moins une mesure d'incrément de chemin réalisée sur ledit canal par intégration des mesures de la phase de porteuse poursuivie par ledit canal et au moins un calcul de pseudo-distance de phase, initialisée avec la pseudo-distance de code et entretenue par la mesure d'incrément de chemin, ledit procédé étant **caractérisé en ce qu'**au moins une des variables du vecteur d'état d'au moins un des filtres de Kalman représente une partie des erreurs sur les mesures de code et de phase du deuxième module de positionnement dues à la traversée des couches ionosphériques de l'atmosphère et **en ce que** les solutions de navigation sont calculées à partir d'observations des différences entre des pseudo-distances calculées à partir des sorties de la première étape de positionnement et les pseudo-distances de code et de phase.

**Patentansprüche**

**1.** Navigationssystem für ein sich bewegendes Fahrzeug, umfassend ein erstes Positionierungsmodul (10) durch Verarbeiten von Trägheitssensormesswerten, ein zweites GNSS-Positionierungsmodul (20), umfassend wenigstens einen Multikanal-Funkfrequenzempfänger (210), wobei jeder Kanal wenigstens einen von einem Satelliten empfangenen Träger erfassen und verfolgen, dessen Phase messen und dessen Signal demodulieren kann, um wenigstens einen Modulationscode zu gewinnen, und ein Modul (30) zum Berechnen von Navigationslösungen durch Hybridisieren der Ergebnisse des ersten Moduls mit denen des zweiten Moduls in wenigstens einem Kalman-Filter (310), wobei das Modul zum Berechnen der Navigationslösung in der Hybridisierung, für einen gegebenen Kanal, wenigstens eine Code-Pseudodistanzberechnung, wenigstens eine Pfadinkrementmessung, realisiert an dem Kanal durch Integrieren der Messwerte der von dem Kanal verfolgten Trägerphase, und wenigstens eine Phasen-Pseudodistanzberechnung beinhaltet, initialisiert mit der Code-Pseudodistanz und fortgeführt durch die Pfadinkrementmessung,

wobei das System **dadurch gekennzeichnet ist, dass** wenigstens eine der Variablen des Zustandsvektors von wenigstens einem der Kalman-Filter einen Teil der Fehler an den Code- und Phasenmesswerten des zweiten Positionierungsmoduls aufgrund der Überquerung der ionosphärischen Schichten der Atmosphäre repräsentiert, und dadurch, dass die Navigationslösungen auf der Basis von Beobachtungen der Differenzen zwischen den Pseudodistanzen berechnet werden, berechnet auf der Basis der Ausgänge des ersten Positionierungsmoduls (10) und der Code- und Phasen-Pseudodistanzen.

2. Navigationssystem nach Anspruch 1, **dadurch gekennzeichnet, dass** die ein oder mehreren Zustandsvariablen, die einen Teil der Fehler an den Code- und Phasenmesswerten des zweiten Positionierungsmoduls aufgrund der Überquerung der ionosphärischen Schichten der Atmosphäre repräsentieren, aus der Gruppe ausgewählt sind, die den ionosphärischen Bias am Code-Messwert, den ionosphärischen Bias am Phasenmesswert und die Variation der ionosphärischen Umgebung umfasst.

3. Navigationssystem nach Anspruch 1, **dadurch gekennzeichnet, dass** ein Teil der Fehler an den Code- und Phasenmesswerten des zweiten Positionierungsmoduls aufgrund der mehreren Pfade der empfangenen Signale in dem Modul zum Berechnen der Navigationslösung durch zwei Zustände modelliert werden, einer für den Code und einer für die Phase.

4. Navigationssystem nach Anspruch 1, **dadurch gekennzeichnet, dass** wenigstens eine der Variablen des Zustandsvektors von wenigstens einem der Kalman-Filter wenigstens teilweise einen Teil der Fehler an den Code- und Phasenmessungen des zweiten Positionierungsmoduls aufgrund der Satellitentaktfehler und der von den Satelliten gesendeten Ephemeriden repräsentiert.

5. Navigationssystem nach Anspruch 1, **dadurch gekennzeichnet, dass** die internen Fehler des Empfängers den Fehler aufgrund des Takts des Empfängers, den Fehler aufgrund des thermischen Rauschens des Empfängers und den Restfehler aufgrund der Verarbeitungsschleifen des Empfängers umfassen.

6. Navigationssystem nach Anspruch 5, **dadurch gekennzeichnet, dass** die Fehler der Verarbeitungsschleifen aufgrund der Dynamik des Flugzeugs durch Verbreitern des Varianzbereichs des Schleifenrauschens in Abhängigkeit von der Dynamik korrigiert werden.

7. Navigationssystem nach Anspruch 6, **dadurch gekennzeichnet, dass** die PLL-Fehler aufgrund des Einflusses eines verrauschten Signals durch Zurückweisen der Phasenmessvariationen berücksichtigt werden, die einem niedrigen Signal-Rausch-Verhältnis entsprechen.

8. Navigationssignal nach Anspruch 1, **dadurch gekennzeichnet, dass** die Managementmodalitäten der Kanäle des Empfängers es zulassen, dass diese Messwerte liefern, die die konfigurierbaren Qualitätskriterien erfüllen.

9. Navigationssystem nach Anspruch 8, **dadurch gekennzeichnet, dass** die Messwerte eines Kanals erst nach einer Verzögerung benutzt werden, die nach dem Empfang der Anzeige des Verfügbarkeitsstatus des Kanals ausgewählt wird.

10. Navigationssystem nach Anspruch 8, **dadurch gekennzeichnet, dass** die Messwerte eines Kanals nur jenseits gewählter Höhenschwellen des verfolgten Satelliten und des Signal-Rausch-Verhältnisses des empfangenen Signals benutzt werden.

11. Navigationssystem nach Anspruch 1, **dadurch gekennzeichnet, dass** die Ergebnisse des Moduls zum Berechnen der Navigationslösung dem ersten Positionierungsmodul geliefert werden, um die Messwerte zu korrigieren.

12. Navigationssystem nach Anspruch 11, **dadurch gekennzeichnet, dass** es N Kalman-Filter zusätzlich zu dem wenigstens einen Hybridisierungs-Kalman-Filter umfasst, einen pro Kanal, der einem Satelliten in Sicht entspricht.

13. Navigationssystem nach Anspruch 12, **dadurch gekennzeichnet, dass** die N Kalman-Filter zum Berechnen von horizontalen und vertikalen Schutzradien der Navigationslösung benutzt werden.

14. Navigationssystem nach Anspruch 1, **dadurch gekennzeichnet, dass** die Ergebnisse des Rechenmoduls dem zweiten Modul nicht geliefert werden, um die Messwerte zu modifizieren.

15. Navigationssystem nach Anspruch 1, **dadurch gekennzeichnet, dass** es wenigstens einen schmalen Doppel-Delta-Korrelator umfasst.

16. Navigationssystem nach Anspruch 1, **dadurch gekennzeichnet, dass** eine Navigationsteillösung am Ausgang des zweiten Positionierungsmoduls vor dem Hybridisieren mit den Ausgängen des ersten Positionierungsmoduls berechnet wird.

17. Navigationssystem nach Anspruch 1, **dadurch gekennzeichnet, dass** das zweite Positionierungsmodul ferner einen baro-altimetrischen Messsensor umfasst.

18. Navigationssystem nach Anspruch 1, **dadurch gekennzeichnet, dass** wenigstens eine der Variablen des Zustandsvektors von wenigstens einem der Kalman-Filter einen Teil der Fehler an den Messwerten des baro-altimetrischen Sensors repräsentiert.

19. Navigationssystem nach Anspruch 1, **dadurch gekennzeichnet, dass** wenigstens eine der Variablen des Zustandsvektors des wenigstens einen der Kalman-Filter einen Teil der Fehler an den Messwerten des Trägheitssensors repräsentiert.

20. Verfahren zum Navigieren eines sich bewegenden Fahrzeugs, das Folgendes beinhaltet: einen ersten Schritt des Positionierens durch Verarbeiten von Trägheitssensormesswerten, einen zweiten Schritt des Positionierens, der wenigstens einen Schritt des GNSS-Multikanal-Funkfrequenzempfangs beinhaltet, wobei jeder Kanal wenigstens einen von einem Satelliten empfangenen Träger erfassen und verfolgen, dessen Phase messen und dessen Signal demodulieren kann, um wenigstens einen Modulationscode zu gewinnen, und einen Schritt des Berechnens von Navigationslösungen durch Hybridisieren, in wenigstens einem Kalman-Filter, der Ergebnisse des ersten Schritts mit denen des zweiten Schritts, wobei der Schritt des Berechnen der Navigationslösung in der Hybridisierung, für einen gegebenen Kanal, wenigstens eine Code-Pseudodistanzberechnung, wenigstens eine Pfadinkrementmessung, realisiert an dem Kanal durch Integrieren von Messwerten der Phase des von dem Kanal verfolgten Trägers, und wenigstens eine Phasen-Pseudodistanzberechnung beinhaltet, initialisiert mit der Code-Pseudodistanz und fortgeführt durch die Pfadinkrementmessung, wobei das Verfahren **dadurch gekennzeichnet ist, dass** wenigstens eine der Variablen des Zustandsvektors von wenigstens einem der Kalman-Filter einen Teil der Fehler an den Code- und Phasenmesswerten des zweiten Positionierungsmoduls aufgrund der Passage der ionosphärischen Schichten der Atmosphäre repräsentiert, und dadurch, dass die Navigationslösungen auf der Basis von Beobachtungen der Differenzen zwischen den auf der Basis der Ausgänge des ersten Positionierungsschritts und der Code- und Phasen-Pseudodistanzen berechnet werden.

**Claims**

1. A navigation system for a moving craft, comprising a first positioning module (10) by processing inertial sensor measurements, a second GNSS positioning module (20) comprising at least one multi-channel radiofrequency receiver (210), each channel being capable of acquiring and tracking at least one carrier received from a satellite, of measuring the phase thereof and of demodulating the signal thereof so as to recover at least one modulation code, and a module (30) for computing navigation solutions by hybridising in at least one Kalman filter (310) the results of the first module with those of the second module, said module for computing the navigation solution including in the hybridisation, for a given channel, at least one code pseudo-distance computation, at least one pathway increment measurement carried out on said channel by integrating measurements of the carrier phase tracked by said channel and at least one phase pseudo-distance computation, initialised with the code pseudo-distance and maintained by the pathway increment measurement, said system being **characterised in that** at least one of the variables of the state vector of at least one of the Kalman filters represents part of the errors on the code and phase measurements of said second positioning module due to the crossing of the ionospheric layers of the atmosphere, and **in that** the navigation solutions are computed on the basis of observations of the differences between the pseudo-distances computed on the basis of the outputs of said first positioning module (10) and the code and phase pseudo-distances.

2. The navigation system according to claim 1, **characterised in that** the one or more state variables representing part of the errors on the code and phase measurements of said second positioning module due to the crossing of the ionospheric layers of the atmosphere are selected from the group comprising the ionospheric bias on the code measurement, the ionospheric bias on the phase measurement and the variation of the ionospheric environment.

3. The navigation system according to claim 1, **characterised in that** part of the errors on the code and phase measurements of the second positioning module due to the multiple paths of the received signals are modelled in the module for computing the navigation solution by two states, one for the code and one for the phase.

4. The navigation system according to claim 1, **characterised in that** at least one of the variables of the state vector of at least one of the Kalman filters at least partially represents part of the errors on the code and phase measurements of said second positioning module due to the satellite clock errors and the ephemerides transmitted by the satellites.

5. The navigation system according to claim 1, **characterised in that** the internal errors of said receiver comprise the error due to the clock of said receiver, the error due to the thermal noise of said receiver and the residual error due to the processing loops of said receiver.

6. The navigation system according to claim 5, **characterised in that** the errors of the processing loops due to the dynamics of the aircraft are corrected by broadening the range of variance of the loop noise as a function of said dynamics.

7. The navigation system according to claim 6, **characterised in that** the PLL errors due to the impact of a noisy signal are taken into account by rejecting the phase measurement variations that correspond to a low signal-to-noise ratio.

8. The navigation system according to claim 1, **characterised in that** the modalities for managing the channels of said receiver allow said channels to supply measurements that meet configurable quality criteria.

9. The navigation system according to claim 8, **characterised in that** the measurements of a channel are only used after a delay that is selected after reception of the indication of the availability status of said channel.

10. The navigation system according to claim 8, **characterised in that** the measurements of a channel are only used beyond selected elevation thresholds of the tracked satellite and of signal-to-noise ratio of the received signal.

11. The navigation system according to claim 1, **characterised in that** the results of the module for computing the navigation solution are fed to said first positioning module so as to correct the measurements.

12. The navigation system according to claim 11, **characterised in that** it comprises N Kalman filters in addition to the at least one hybridisation Kalman filter, one per channel corresponding to a satellite in view.

13. The navigation system according to claim 12, **characterised in that** the N Kalman filters are used to compute horizontal and vertical protection radii of the navigation solution.

14. The navigation system according to claim 1, **characterised in that** the results of the computation module are not fed to said second module to modify the measurements.

15. The navigation system according to claim 1, **characterised in that** it comprises at least one narrow double-delta correlator.

16. The navigation system according to claim 1, **characterised in that** a partial navigation solution is computed at the output of said second positioning module before being hybridised with the outputs of said first positioning module.

17. The navigation system according to claim 1, **characterised in that** said second positioning module further comprises a baro-altimetric measurement sensor.

18. The navigation system according to claim 1, **characterised in that** at least one of the variables of the state vector of at least one of the Kalman filters represents part of the errors on the measurements of said baro-altimetric sensor.

19. The navigation system according to claim 1, **characterised in that** at least one of the variables of the state vector of at least one of the Kalman filters represents part of the errors on the measurements of said inertial sensors.

**20.** A method for navigating a moving craft, comprising a first step of positioning by processing inertial sensor measurements, a second step of positioning comprising at least one step of GNSS multiple channel radiofrequency reception, each channel being capable of acquiring and tracking at least one carrier received from a satellite, of measuring the phase thereof and of demodulating the signal thereof so as to recover at least one modulation code, and a step of computing navigation solutions by hybridising in at least one Kalman filter the results of said first step with those of said second step, said step of computing the navigation solution including in the hybridisation, for a given channel, at least one code pseudo-distance computation, at least one pathway increment measurement carried out on said channel by integrating measurements of the carrier phase tracked by said channel and at least one phase pseudo-distance computation, initialised with the code pseudo-distance and maintained by the pathway increment measurement, said method being **characterised in that** at least one of the variables of the state vector of at least one of the Kalman filters represents part of the errors on the code and phase measurements of said second positioning module due to the passage of the ionospheric layers of the atmosphere, and **in that** the navigation solutions are computed on the basis of observations of the differences between the pseudo-distances computed on the basis of the outputs of said first positioning step and the code and phase pseudo-distances.

FIG.1

**Capteurs supplémentaires**

GNSS  Barométrie

Mesures brutes GNSS
de code et phase

**Système Inertiel**

IMU  $\Delta\theta$  $\Delta v$  PFV + LOC

Paramètres de navigation :
(Position, Vitesse, Attitude,
Pqr, Accélération)

**Hybridation
boucle ouverte**

Filtre de Kalman
principal F $\phi$

Solution de navigation
hybride
(Position, Vitesse, Attitude)

# FIG.2

FIG.3

FIG.4

EP 2 245 479 B1

EP 2 245 479 B1

Modèle d'anomalies
ionosphériques

➡ Front de vitesse relative m/s

Gradient de pente relative mm/km

Retard max

Différence de retard
réelle

Vitesse avion
m/s

D

Station GBAS
sol

# FIG.5

Erreur de position horizontale
GPS seul

Ecart type de position horizontale
GPS seul

Erreur de position horizontale
Hybride

Ecart type de position horizontale
Hybride

FIG.6A

FIG.6B

EP 2 245 479 B1

FIG.7

**EP 2 245 479 B1**

**Documents brevets cités dans la description**

- FR 2830320